# EUROPEAN PATENT SPECIFICATION

(11) **EP 0 452 692 B1**
(45) Date of publication and mention of the grant of the patent: **04.06.1997**
(21) Application number: 91104394.1
(22) Date of filing: 21.03.1991
(51) Int. Cl.: G06F 3/033

(54) **Conditional look ahead valid option determination**
Bedingte Vorgriffsbestimmung der gültigen Option
Détermination anticipée conditionnelle des options valides

(30) Priority: 19.04.1990 US 511130
(43) Date of publication of application: 23.10.1991
(73) Proprietor: International Business Machines Corporation, Armonk, N.Y. 10504 (US)
(72) Inventor: Higgins, Patricia E., Gaithersburg, MD 20878 (US); Hu, Ta-Jen, Rockville, MD 20850 (US); Potts, Joseph W., Bethesda, MD 20814 (US); Wyatt, William J., Lowell, MA 01854 (US)
(74) Representative: Rach, Werner, Dr.

(56) References cited:
- RESEARCH DISCLOSURE NO30780 November 1989, HAVANT GB page 837 'User Interface for Dynamic Change of Action Bar and Pulldown Content Based Upon Attributes of Selected Objects'
- BYTE January 1989, pages 223 - 228 SHAMMAS N. C. 'QuickBASIC Comes to the Macintosh'

## Description

This invention relates generally to menu driven interactive data processing systems. More particularly, it relates to a method to prevent a user from attempting to perform actions which will definitely fail and informing the user which of previously selected options will cause those actions to fail.

In modern data processing systems, an attempt is usually made to write software which helps control those systems to allow their operation in a "user-friendly" manner. A typical method of writing user friendly software is to provide a series of menus which include lists of the actions which are selectable by a user at a particular place in the program. Such programs are popular because human factors studies have shown that it is easier for users to recognize and select desired items from a list on a display screen, rather than having to remember numerous and lengthy commands to operate the data processing system. When a user desires to select a particular item or action, he moves the input focus of the system to the selected item with the aid of cursor direction keys or a pointing device, such as a mouse and transmits an input to the system via a keyboard or mouse button. The input focus of the system is generally identical to the current cursor position.

As software grows in complexity, many actions may be "affected", i.e., disabled, by choices already made by the user during the data processing session. If these affected actions are left on the menu, a user may select such an affected action which will fail to execute. The data processing system will then flash an error message to the user indicating that the action cannot be accomplished. It would be advantageous to inform a user in advance that a particular action is affected, and therefore, not to attempt the action. This avoids tying up the data processing system with unfruitful requests and error messages.

In menu driven software, the prior art has utilized two methods of preventing a user from selecting such affected actions. A first method is to only include those actions which are unaffected and properly selectable by the user in the menu. In this method, affected actions are simply left off the menu. A disadvantage of this first method is that a user who remembers that a particular action could be selected at this place in the program when he had made different previous choices will become confused, believing that he is at a different place in the program. This may lead to a search for the affected action in other menus, wasting the user's time and increasing his dissatisfaction with the software.

A second method employed in the art is to highlight actions which are selectable in the menu, i.e., leaving the affected actions in a de-emphasized state. This is an improvement over the first method in that the user is not likely to be confused about his place in the program. However, the user has no way of understanding which of his previous selections have caused the action to be affected without referring to documentation.

It is, therefore, a primary object of this invention to inform a user about past selections which have affected a particular action on a menu.

It is further object of this invention to prevent a user from attempting actions which will fail to execute.

These and other objects, features and advantages of the invention are accomplished in advantageous manner basically by the method for displaying the effect of past actions on present affected actions, as disclosed herein and claimed in the independent claims.

The method is practiced in a data processing system which includes a central processing unit (CPU), a random access memory (RAM), a means of inputting user selections such as a keyboard and a mouse and a means of displaying the results of such selections to the user. A plurality of program modules and data objects are resident in the memory. The invention is designed to control the data processing system by listing the possible selections on a series of menus presented on the display means.

While operating the data processing system according to the instructions in one of the program modules, the CPU will instruct the display means to display the menu which corresponds to that particular point in the program. Following the method of the present invention, the CPU keeps track of the past selections made by the user. By referring to a data file which correlates these past selections to the list of actions displayed in the menu, the CPU determines which of these actions are affected. These affected actions are then denoted on the menu in some way, e.g., changing the affected action's color, marking the affected actions with a special symbol, etc. Responsive to the user placing the input focus on an affected action, the CPU presents a list of the past selections which cause the action to be affected on the display means. One preferred embodiment of the invention would allow a user to deselect the past selections which cause the action to be affected, and thereby transform the affected action to an unaffected action. The user could then perform the desired action with the remaining past selection is.

These and other objects, features and advantages of the invention will be more fully appreciated in the detailed description of an embodiment of the invention with reference to the accompanying drawing, in which
FIG. 1. shows a system block diagram of a data processing system which operates according to the principles of the present invention;
FIG. 2. shows an example of a display screen menu which includes a menu bar of possible actions and a list of selectable data file objects before any objects are selected;
FIG. 3. shows the menu in FIG. 2 with a pull down action bar showing selectable and nonselectable subactions;
FIG. 4. shows an example of display screen menu which includes a menu bar of possible actions and a list of selectable data file objects where some of those objects are selected by the user;
FIG. 5. shows the menu in FIG. 4 with a pull down action bar showing affected and unaffected subactions;
FIG. 6. shows the menu in FIGs. 4 and 5 with a pop-up window of the past selections which are causing a subaction to be affected;
FIG. 7. shows the menu in FIG. 4 with a pull down action bar showing the subactions after past selections affecting one of the subactions have been deselected;
FIG. 8. is a matrix of a first set of possible selections mapped against a second set of possible selections which describes if a file can be sent from a member of the first set of possible selections to a member of the second set; and
FIG. 9. is a flow diagram of the logical operations performed in the method of the invention.

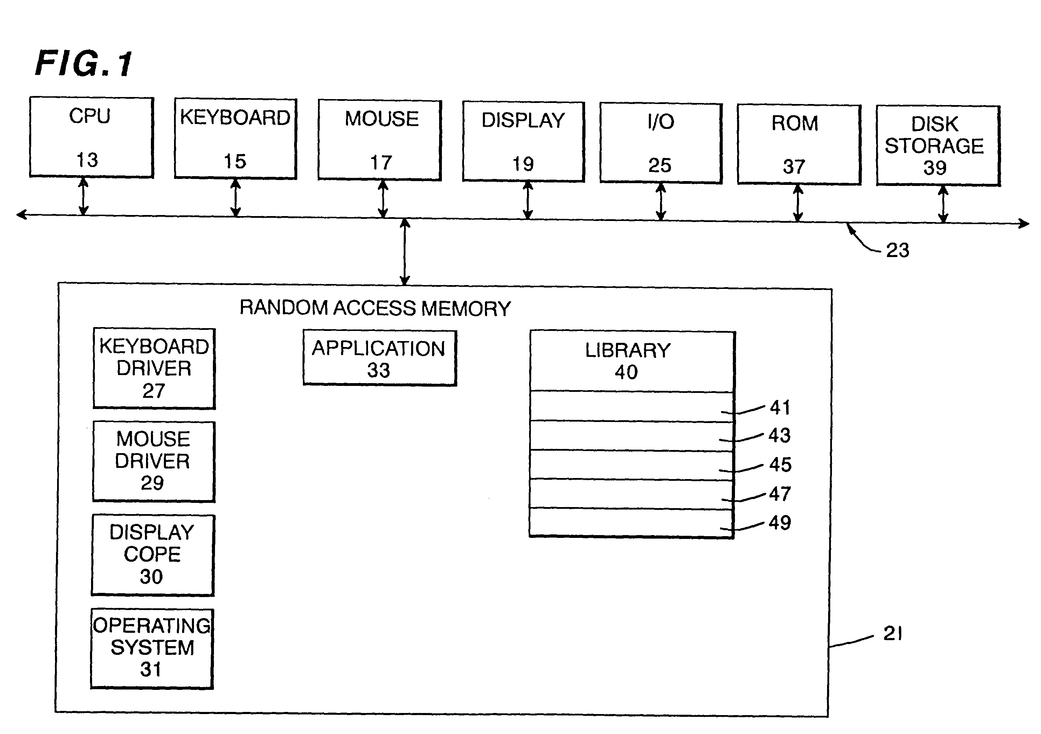

The data processing system shown in FIG. 1 includes a central processing unit (CPU) 13, a keyboard 15, a mouse 17 and a display unit 19 all of which are coupled to each other and to the random access memory 21 by means of a system bus 23. Other types of pointing devices could be used in place of the mouse 17, such as a touch sensor. The memory 21 contains a number of program modules including a keyboard driver 27 which interprets the electrical signals sent by the keyboard 15, a mouse driver 29 which interprets the electrical signals sent by the mouse 17, display code 30 which controls the presentation of information to the user on the display 19 and an operating system 31 which provides a set of general instructions for the CPU 13 to control data transfer throughout the data processing system. The memory 21 further includes an application program 33 and library 40 which contains a number of data files or objects 41, 43, 45, 47, and 49 which can be selected by the user for manipulation by the application program 33. The library 40 could contain hundreds of data files, however, only five are illustrated in the figure. Other input/output devices can be connected via the I/O port 25 to the remainder of the data processing system. Also coupled to the system bus 23 are the read only memory (ROM) 37 and disk storage 39.

The data processing system depicted in FIG. 1 could be controlled by an IBM System 370 - type host central processor connected to a number of individual workstations (not shown). The invention can also be implemented in a stand-alone processor such as a personal computer, e.g., the IBM PS/2 computer. The invention is particularly appropriate in an application 33 called Library Drawer which handles data files 41, 43, 45, 47 and 49 which possess differing characteristics. Some actions programmed into the application 33 may be carried out on some data files but not others. In the preferred embodiment, the library 40 contains several types of data files: paper references, search patterns, notes, spreadsheets and search results. A paper reference is a data file that "points" to an actual hardcopy of a document. It has no actual content -- it consists only of descriptors. Descriptors are attributes, or properties of an object or file. Typical descriptors include "name", "description", "class" , "author", and "owner". Content is analogous to a PC flat file or ASCII text. Content is a term for the actual bits stored in a data file, e.g., the bits associated with the characters "a", "p" and "e" in the word "ape". A search pattern is a data file consisting of search criteria used to find other data files in the library. The search criteria are mainly matched against another object's descriptors. This object, like all other objects in the library 40, contains descriptors which apply to it. A search result is an object consisting of descriptors, search criteria, and the results of a search using the stored search criteria that is a part of this object. Documents, Notes, Memos are different versions of standard text objects. These consist of both descriptors and content.

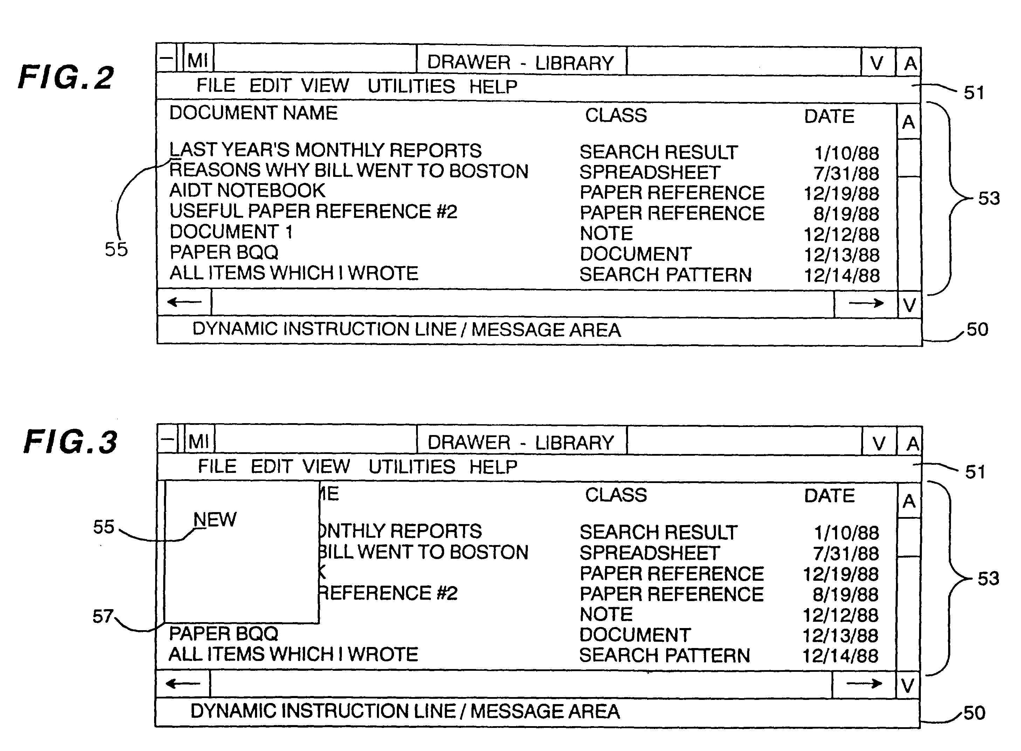

Library drawer 33 can work with search patterns, search results, or other data files in the library 40. Library drawer 33 first displays all items to which the user has access in the menu panel depicted in FIG. 2. The types or classes of objects chosen by the user and depicted in the menu panel can include any of the documents, notes, search patterns, search results, paper references, and other files found in the library 40. For example, the user may choose to look only at data files that have shared characteristics or properties by performing a search of the library 40. Library drawer 33 will create or edit search patterns to specify the search criteria and perform a search and show the results in a search result.

Different actions within Library drawer 33 which are selectable by the user include:
- File: To work with objects or change their properties
- View: To change how the list of objects in this window is displayed.
- Utilities: To check objects into or out of the Library or to invalidate their checkout.
- Help: To get online contextual help or extended help.

In the preferred embodiment, actions have subactions. Some examples of subactions of the action "File" include "Move", "Copy" and "Send". "Move" is used to move the data files selected from the Library 40 to another location, either in the RAM 21 or other on storage media such as hard disk 39. "Move" can give the file new names or keep their current names. The files and their properties are erased from the Library 40 when they are moved. According to the rules of Library drawer 33, the user cannot move paper references, search patterns, or search results from the Library 40. "Copy" is used to copy file within the Library 40 or from the Library 40 to another location. "Copy" can give the items new names or keep their current names. The user cannot copy paper references or, search patterns, to a location outside the library 40, and can not copy search results at all. "Send" is used to send copies of the selected file to other users. In Library drawer 33, the user cannot send search patterns, or search results to other users.

FIG. 2 depicts a sample menu 50 presented to the user on display 19 while CPU 13 utilizes instruction from the operating system 31 and Library drawer 33 to operate on the data files contained in the Library 40. The menu 50 displays the actions available to the user on action bar 51 as well as a list 53 of data files available to be selected by the user. The list 53 of data file names corresponds to the data files 41-49 depicted in FIG. 1. Also included in FIG. 2 is the class of each data file and the date on which it was last revised. The input focus or cursor position 55 is shown as a single underline character. Although the sample menu portrayed depicts only seven data files for purposes of illustration, in actual use the Library 40 could contain hundreds of files. The user would access additional files by scrolling through the list of data files 53, for example, by repeatedly depressing a function key, until the desired data files had been displayed in the menu 50.

In FIG. 2, no data files have been selected by the user. Consequently, no action can be said to be "affected" by the past choices of the user. Nonetheless, when no data files have been selected, certain actions can not be performed. As shown in FIG. 3, when the input focus 55 of the system is moved to one of the actions in the action bar 51, for example, "File", the action is emphasized and a pull down action bar 57 appears which lists the selectable subactions of "File" in bold, while the nonselectable subactions are shown crossed out. Other methods of denoting the distinction between the two types subactions would be obvious to one skilled in the art.

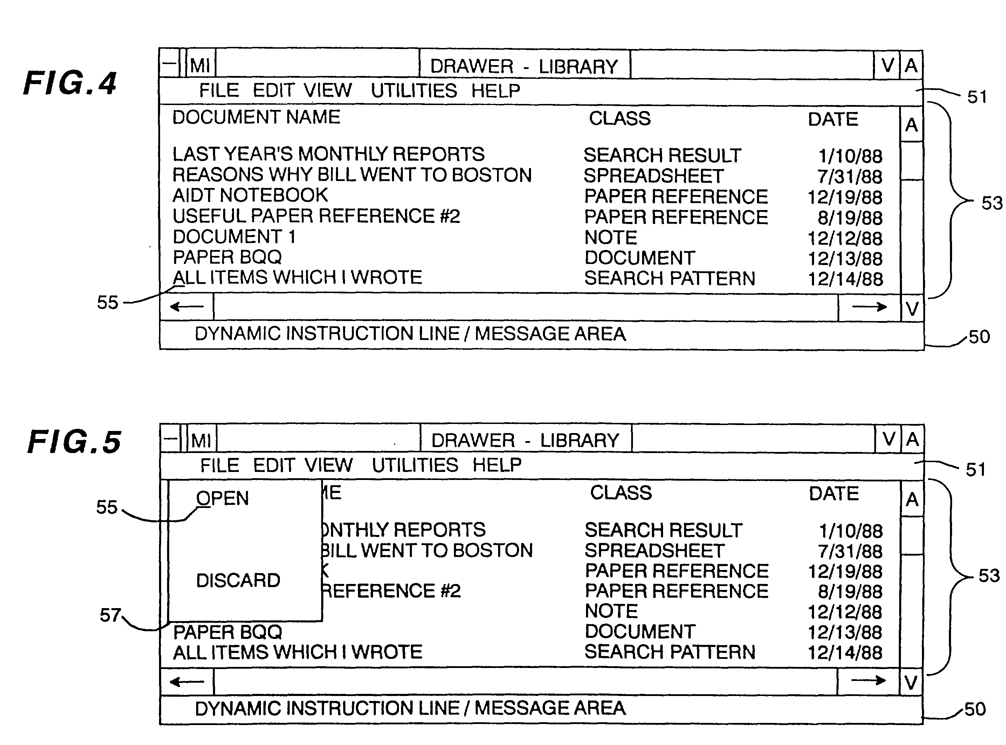

FIG. 4 shows the sample menu 50 presented on the display 19 after several of the data files in list 53 have been selected by the user. The selected data files are shown in bold. The user selects a data file for manipulation by the application program 33 by moving the cursor 55 to the line of the data file and causing an input to be transmitted to the data processing system. In the preferred embodiment, this is accomplished through the use of a mouse 17 by clicking a mouse button once the cursor 55 is properly positioned. A user can deselect a data file by moving the cursor 55 to a emphasized item and then clicking a mouse button.

In FIG. 4, none of the actions in the action bar 51 are shown to be affected, despite the fact that a number of data files have been selected which are affecting the subactions of the action. This is a design decision made in the preferred embodiment. Since the user must first move the cursor to the action to execute the desired subaction, the user will be informed at that time that the desired subaction is affected. Most actions will have a mixture of affected and unaffected subactions once a number of data files are selected. In the preferred embodiment, it might be confusing to show that all the actions are affected. The user might be misled to believe that none of the actions are executable, when in fact only one or two subactions under each action are affected. In a different menu format, where the actions do not have subactions, it would be appropriate to cross out the action as it is affected. In a menu format where actions do not have subactions, the actions will change from bold to crossed-out to bold as various data files are selected and deselected. In one embodiment of Library drawer 33 as illustrated in the accompanying figures, actions in the action bar 51 become crossed out only when all their subactions are affected.

In FIG. 5, shows the menu in FIG. 4 when the cursor 55 is placed on an action bar 51. When this input from the user is received by the data processing system a pull down action bar 57 appears. In pull down action bar 57, the subactions which are affected are crossed-out, while those which remain unaffected are shown in normal type. As data files are selected to be acted upon, the subactions which can not be performed on all types of data files selected will be crossed out in the pull down action bar 57.

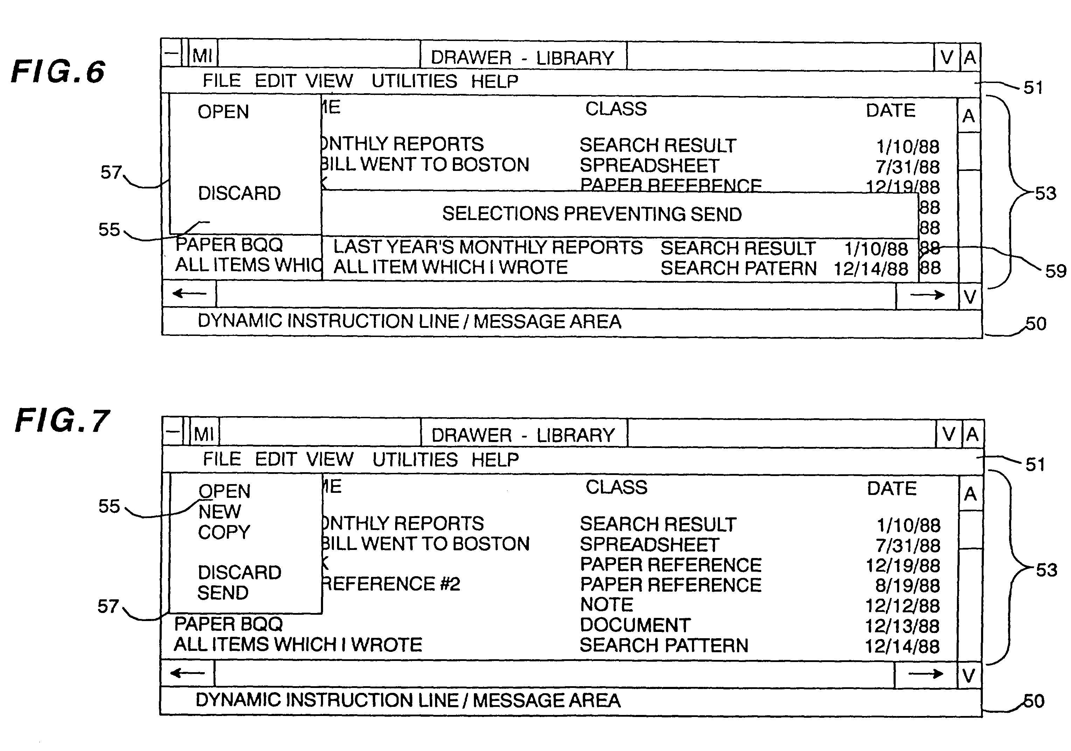

When the input focus e.g., cursor 55, of the system is on an affected subaction in the pull down action bar 57, a pop-up window 59 containing the list of the selected data files which are causing the subaction to be affected as displayed. This is shown in FIG. 6. The input focus of the system can be placed in the action bar 51 or the pull down action bar 57 by using either the keyboard or the mouse. The advantage of showing the pop-up window 59 of the selected data files is that the user gains an understanding of which of his past selections has affected the subaction, and therefore, if he wants to implement the subaction in the future, he will avoid choosing selections of the same data type. One preferred embodiment of the invention allows the user to deselect the past selections which cause the subaction to be affected. It is preferred to allow the user to deselect the data files by moving the cursor to the data files listed in pop-up window 59, and clicking the mouse button. In a less preferred embodiment, the user could return to the menu of FIG. 4 and deselect by moving the cursor to the selected data files in list 53 and clicking a mouse button. After the past selections in the pop-up window 59 have been deselected, the subaction goes from affected to unaffected. The user could then perform the subaction with the remaining past selections. FIG. 7 shows the menu 50 in FIG. 4 with the pull down action bar 57 showing the subactions after the past selections affecting the subaction have been deselected.

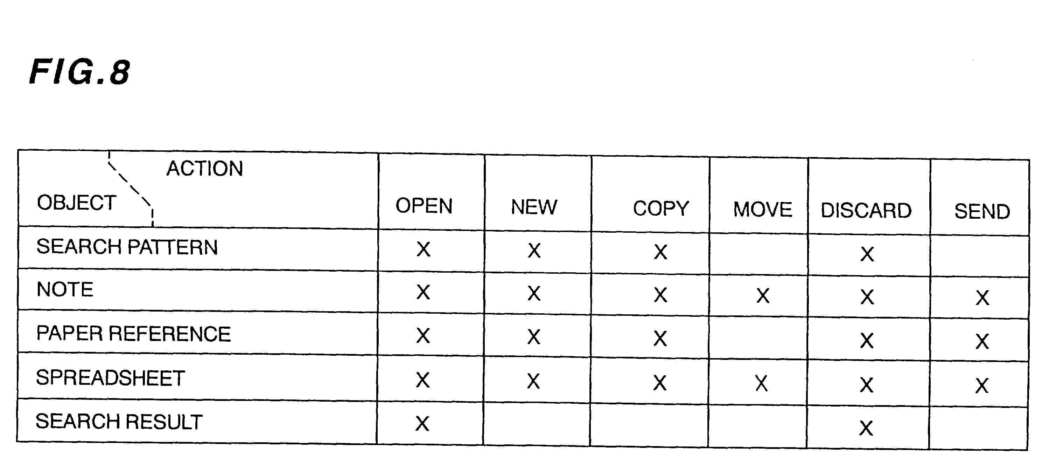

FIG. 8 depicts a matrix which contains information on which objects or data files are incompatible with the subactions of "File". The data files are listed vertically in the matrix, and the subactions are listed horizontally. A blank is present when a particular subaction is affected when a data file of a given type is selected. As shown in FIG. 8, when a search pattern is chosen, both "Move" and "Send" are affected. Similarly, when a paper reference is selected, only "Move" is affected. No actions are affected by the selection of a note or spreadsheet. The information in the matrix is held in a special data file. In the preferred embodiment, the data is held in a bit stream after a descriptor indicating a particular class of data file. The first column might indicate whether the subaction "open" was affected by the selection of that class of data file, the second column might indicate whether the subaction "new" was affected by the selection of that class of data file. A "1" would indicate that the subaction was selectable; a "0" would indicate that the subaction was affected. For example, the bit stream after the descriptor for search pattern in FIG. 8 would be "111010". After all the objects are selected by the user, the CPU logical "ANDs" the bit streams together. Thus, any of the subactions affected by any of the past selections would be indicated by a "0". Similar matrices are stored for the subactions of the other actions in the action bar 51.

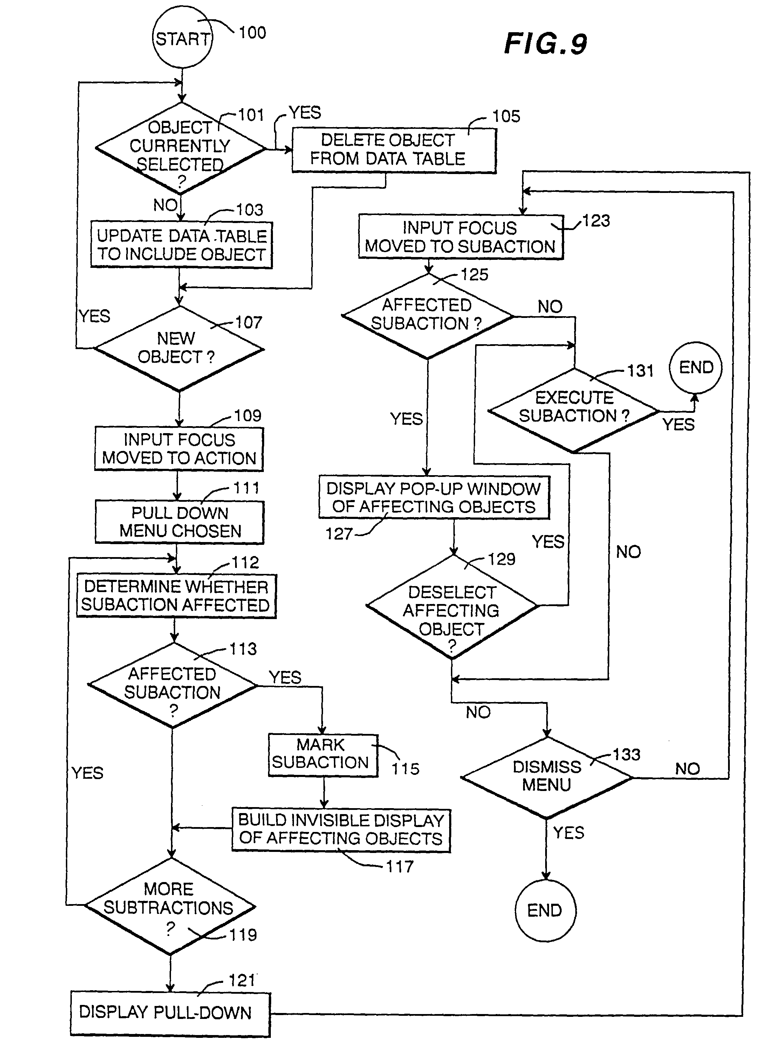

FIG. 9 depicts a flow diagram of the operation of the invention according to a preferred embodiment. The flow diagram starts with the user being presented a list of object or data files like that shown in FIG. 2 from which he can select or deselect object in step 101. In step 101, the user has input a mouse click to the data processing system while the cursor is on one of the objects in list 53. The CPU then determines whether the object is selected or unselected. If not, the cursor is on an unselected object and when a mouse button is depressed the object is thereby selected. If the object goes from unselected to selected, the method continues to step 103 and updates a data table to reflect that the object has now been selected. The user may continue to select objects by moving the cursor to a new object in step 107 or may decide that he is finished selecting objects and the method progresses to step 109. If an object goes from selected to deselected, that object's information is removed from the data table in step 105. Other selected objects may be deselected by moving the cursor to a new selected object and inputting a signal to the system to deselect the object in step 107. As the objects are selected or deselected, the menu is continually updated so that the selected object names are in bold relative to deselected object names.

The user then moves the input focus to an action in the action bar 51 in step 111. The pull down action bar 57 associated with the selected action is chosen. However, before the data processing system displays the pull down action bar 57, it determines whether each subaction in the pull down action bar 57 is affected. The data processing system performs this determining step 112 by correlating the data table of previously selected objects built in steps 103 and 105 above with the subaction, and refers to the previously programmed information in the special data file depicted in FIG. 8 in step 113. If the subaction is affected, the subaction is marked in step 115 and an invisible display of the objects which cause that subaction to be affected is built and associated with that subaction in step 117. The system then determines whether there are any more subactions in the pull down action bar 57 in step 119 and repeats the process until it determines which subactions are affected or unaffected. The pull down action bar 57 is then displayed to the user in step 121.

The user then moves the input focus to a subaction in the pull down bar 57 in step 123. If the subaction is affected, step 125, the system displays the heretofore invisible pop-up display 59 of the objects which are causing the action to be affected. Next, the user will have the option of deselecting the affecting objects, step 129, and execute the now unaffected subaction, step 131. Alternatively, the user can opt not to deselect any objects and either move the input focus to another subaction, step 123, or dismiss the menu entirely, step 133. The preferred means of deselecting the selected objects is to move the input focus of the system to the affecting object and depress a mouse button. If the subaction is unaffected in step 125, the user has the options of executing the subaction, step 131, moving the input focus to another subaction, step 123, or dismissing the menu, step 133.

The cursor can be placed in the action bar 51 or in a pull down menu 59 by either using the cursor direction keys on the keyboard or the mouse. In either case, the data processing system knows that the cursor 55 is on the menu and will notify the application that it has the input focus, by sending messages already programmed into the operating system 31. For example, in an OS/2 and Presentation Manager environment the CPU 13 notifies the application program 33 that it has the input focus by sending a WM-INITMENU message. In response, the application 33 builds the menu 50, and any invisible menus such as the pull down action bar 57 and the pop-up display 59 and then transfers control of the system back to the operating system 31. The user then moves the input focus of the system via mouse or keyboard. The CPU 13 then notifies the application about the change in location of the cursor via a WM-MENUSELECT message. In response, the application 33 sends one of the invisible menus to the CPU 13 for presentation on the display 19, and transfers control back to the operating system. As the user continues to move the cursor about the menu, a steady stream of WM-MENUSELECT messages are sent to the application 33. When the user has finished with the application 33, the operating system 31 and CPU 13 notify the application 33 by sending a WM-ENDMENU message. The application 33 then destroys the built up images of the various menus. The particular action is determined by issuing WM-QUERYITEM messages, and if it is an affected menu action, then display the list of affected objects.

The following is a pseudocode description of the logic behind this process. The actual code will be part of a window procedure that manages a menu which contains, at a minimum, a list of selectable objects, and a menu containing actions which can be performed on those objects.

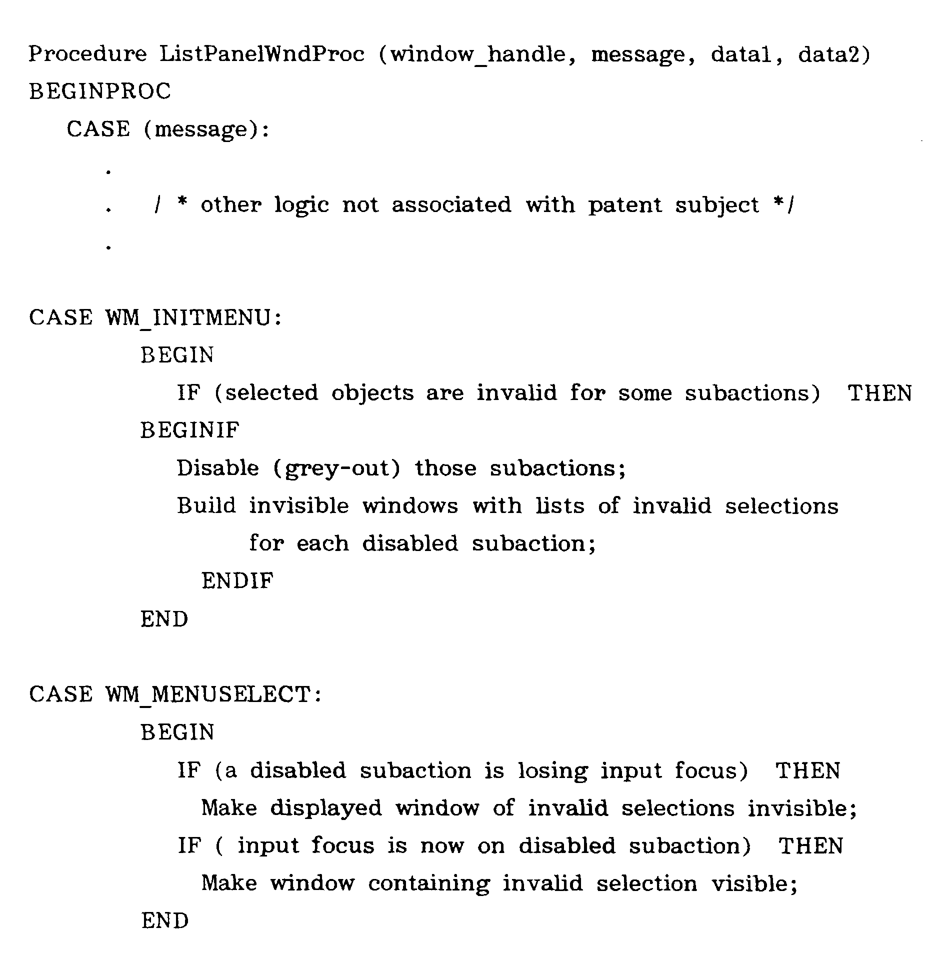

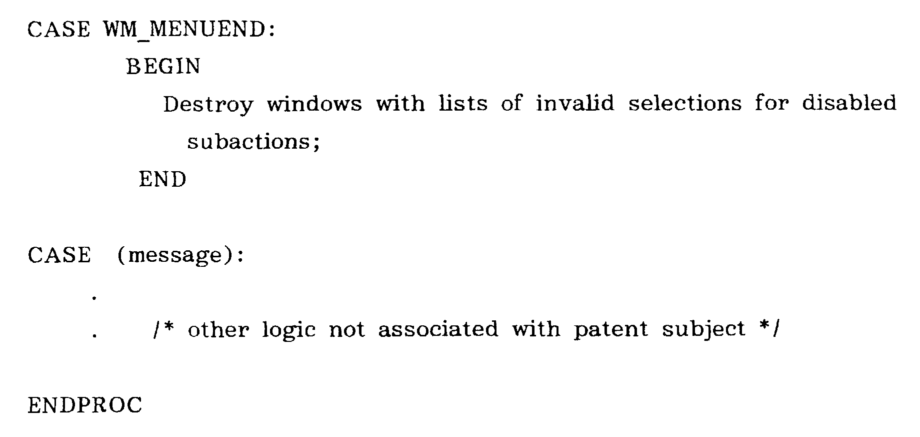

Those skilled in the art would recognize that there are a plethora of ways of distinguishing between affected and unaffected actions on a display screen. The two types of actions could be displayed in different colors, one type of action could be displayed in different colors, one type of action could be in reverse video or marked with any of a variety of symbols. The choice of crossing out the affected actions as opposed to the other available methods of denoting the affected action was simply a design choice in the preferred embodiment.

Although a specific embodiment has been disclosed, it will be understood by those skilled in the art that changes can be made to the specific embodiment without departing from the spirit and scope of the invention. For example, in the preferred embodiment above, the "past selections" are data files or data objects which affect one or more actions which would normally be selectable by a user at a particular menu. The present invention would also cover a data processing system in which the "past selections" are actions taken by the user prior to the menu which displays the affected actions. The specific embodiment disclosed is for purposes of illustration only and is not to be taken to limit the scope of the inventions narrower than the appended claims.

Also, there are other means available in the prior art, to determine which of the past actions are affected in addition to correlating of a list of past selections to a data file as presented in the embodiment above.

## Claims

1. In a data processing system including a processor (13), a memory (21), display means (19) and input means coupled together by means of a system bus (23), a method comprising the steps of:
establishing a selections list (59) containing a plurality of selections in the memory (21) which have been selected by a user;
updating the selections list (59) in response to selection or deselection by the user;
determining whether any of the selections contained in the selections list (59) have disabled any action in an actions list containing a plurality of actions;
displaying a menu (50) on the display means (19), the menu containing at least one disabled action, the disabled action being displayed in a manner which indicates that the disabled action is disabled; and,
indicating which of the selections contained in the selections list (59) have caused the disabled action to be disabled in response to the user moving a cursor (55) to the disabled action.

2. The method as recited in claim 1 wherein the determining step comprises the step of comparing the selections list (59) and the actions list against a data file stored in the memory (21) which indicates which of the actions contained in the actions list are disabled by the selections contained in the selections list (59).

3. The method as recited in claim 1 wherein the indicating step further comprises the step of displaying a second selections list containing the selections which have caused the disabled action to be disabled.

4. The method as recited in claim 1 wherein each selection contained in the selections list (59) is a name of a data file where the data file is resident in the memory (21).

5. The method as recited in claim 1 wherein both disabled and executable actions are displayed on the menu (50).

6. The method as recited in claim 1 wherein the menu (50) containing at least one disabled action is a pull down menu from an action bar (57), the pull down menu containing an action in the action bar, and the disabled action is a subaction of the action in the action bar.

7. The method as recited in claim 3 which further comprises the step of changing a selection which is causing, the disabled action to be disabled from a selected state to a deselected state from the second selections list, thereby changing the disabled action to an executable action.

8. The method as recited in claim 1 wherein the indicating step is initiated by the step of moving the cursor (55) to the disabled action by manipulating a mouse pointing device (17).

9. The method as recited in claim 1 wherein the indicating step is initiated by the step of moving the cursor (55) to the disabled action by manipulating a set of cursor control keys on a keyboard (15).

10. A data processing system for informing a system user which of a plurality of selections made by the system user have disabled an action in a menu presented to the user comprising:
a memory (21) for storing program modules and data files;
a processor (13) coupled to the memory (21) by means of a system bus (23) the processor (13) operates the data processing system according to instructions in the program modules stored in the memory (21);
means for establishing a selections list (59) in memory (21), the selections list (59) containing a plurality of selections which have been selected by the system user;
means for updating the selections list (59) in response to a selection or deselection by the system user;
means for determining whether any of the selections contained in the selections list (59) have disabled any action in an actions list containing a plurality of actions;
display means (19) for displaying information to the system user coupled to the processing means and the memory (21) by means of a system bus (23), the display means (19) displaying the actions list in a menu including at least one disabled action displayed in a manner indicating its disabled state;
an input device for querying the data processing system as to the selections which are causing the disabled action to be disabled; and,
means for indicating which of the selections have caused the disabled action to be disabled in response to the input means signaling that a cursor (55) has been moved to the disabled action.

11. The system as recited in claim 10 wherein each selection contained in the selections is a name of a data file where the data file is resident in the memory (21).

12. The system as recited in claim 10 wherein both disabled and executable actions are displayed in the menu.

13. The system as recited in claim 10 wherein the menu containing at least one disabled action is a pull down menu from an action bar (57), the pull down menu containing subactions of an action in the action bar (57), and the disabled action being a subaction in the pull-down menu.

14. The system as recited in claim 10 which further comprises a means for changing a selection which is causing a particular action to be disabled from a selected to a deselected state from a section selections list (59) which have caused the action to be disabled, thereby changing the disabled action to an executable action.

## Patentansprüche

1. In einem Datenverarbeitungssystem mit einem Prozessor (13), einem Speicher (21), Anzeigemitteln (19) und Eingabemitteln, die über einen Systembus (23) miteinander verbunden sind, ein Verfahren, welches die folgenden Schritte umfaßt:
Aufbauen einer Auswahlliste (59), die eine Vielzahl von Auswahlen in dem Speicher (21) enthält, die durch einen Benutzer ausgewählt wurden;
Aktualisieren der Auswahlliste (59) als Antwort auf die Auswahl oder das Zurücknehmen der Auswahl durch den Benutzer;
Feststellen, ob irgendwelche der in der Auswahlliste (59) enthaltenen Auswahlen irgendeine Aktion in einer Aktionsliste mit einer Vielzahl von Aktionen gesperrt haben;
Anzeigen eines Menüs (50) an dem Anzeigemittel (19), wobei das Menü mindestens eine gesperrte Aktion enthält, wobei die gesperrte Aktion auf eine Art angezeigt wird, die meldet, daß die gesperrte Aktion-gesperrt ist; und
Anzeigen, welche der in der Auswahlliste (59) enthaltenen Auswahlen das Sperren der gesperrten Aktion als Antwort auf das Bewegen eines Cursors (55) auf die gesperrte Aktion durch den Benutzer veranlaßt haben.

2. Verfahren gemäß Anspruch 1, wobei der Feststellungsschritt den Schritt des Vergleichens der Auswahlliste (59) und der Aktionsliste mit einer in dem Speicher (21) gespeicherten Datendatei umfaßt, die anzeigt, welche der in der Aktionsliste enthaltenen Aktionen durch die in der Auswahlliste (59) enthaltenen Auswahlen gesperrt sind.

3. Verfahren gemäß Anspruch 1, wobei der Anzeigeschritt weiterhin den Schritt des Anzeigens einer zweiten Auswahlliste umfaßt, welche die Auswahlen enthält, die das Sperren der gesperrten Aktion veranlaßt haben.

4. Verfahren gemäß Anspruch 1, wobei jede in der Auswahlliste (59) enthaltene Auswahl ein Name einer Datendatei ist, wobei sich die Datendatei in dem Speicher (21) befindet.

5. Verfahren gemäß Anspruch 1, wobei sowohl gesperrte als auch ausführbare Aktionen in dem Menü (50) angezeigt werden.

6. Verfahren gemäß Anspruch 1, wobei das Menü (50), das mindestens eine gesperrte Aktion enthält, ein Aktionsfenster von einer Aktionsleiste (57) ist, wobei das Aktionsfenster eine Aktion in der Aktionsleiste enthält und die gesperrte Aktion eine Unteraktion der Aktion in der Aktionsleiste ist.

7. Verfahren gemäß Anspruch 3, das weiterhin den Schritt des Änderns einer Auswahl umfaßt, die das Sperren der gesperrten Aktion von einem ausgewählten Status zu einem nicht ausgewählten Status aus der zweiten Auswahlliste veranlaßt, wobei die gesperrte Aktion in eine ausführbare Aktion geändert wird.

8. Verfahren gemäß Anspruch 1, wobei der Anzeigeschritt durch den Schritt des Bewegens des Cursors (55) auf die gesperrte Aktion durch Betätigen einer Mauszeigereinheit (17) eingeleitet wird.

9. Verfahren gemäß Anspruch 1, wobei der Anzeigeschritt durch den Schritt des Bewegens des Cursors (55) auf die gesperrte Aktion durch Betätigen einer Gruppe von Cursorsteuertasten an einer Tastatur (15) eingeleitet wird.

10. Datenverarbeitungssystem zum Informieren eines Systembenutzers, welche aus einer Vielzahl von Auswahlen, die durch den Systembenutzer erfolgten, eine Aktion in einem dem Benutzer gezeigten Menü gesperrt haben, das folgendes umfaßt:
einen Speicher (21) zum Speichern von Programmbausteinen und Datendateien;
einen Prozessor (13), der mit dem Speicher (21) über einen Systembus (23) verbunden ist, wobei der Prozessor (13) das Datenverarbeitungssystem gemäß den Instruktionen in den Programmbausteinen betreibt, die in dem Speicher (21) gespeichert sind;
Mittel zum Aufbauen einer Auswahlliste (59) im Speicher (21), wobei die Auswahlliste (59) eine Vielzahl von Auswahlen umfaßt, die durch den Systembenutzer ausgewählt wurden;
Mittel zum Aktualisieren der Auswahlliste (59) als Antwort auf eine Auswahl oder das Zurücknehmen einer Auswahl durch den Systembenutzer;
Mittel zum Feststellen, ob irgendwelche der in der Auswahlliste (59) enthaltenen Auswahlen irgendeine Aktion in einer Aktionsliste mit einer Vielzahl von Aktionen gesperrt haben;
Anzeigemittel (19) zum Anzeigen von Informationen für den Systembenutzer, das mit dem Verarbeitungsmittel und dem Speicher (21) über einen Systembus (23) verbunden ist, wobei das Anzeigemittel (19) die Aktionsliste in einem Menü mit mindestens einer gesperrten Aktion anzeigt, die auf eine Art angezeigt wird, die ihren gesperrten Status meldet;
eine Eingabeeinheit zum Abfragen des Datenverarbeitungssystems bezüglich der Auswahlen, die das Sperren der gesperrten Aktion veranlassen; und
Mittel zum Anzeigen, welche der Auswahlen das Sperren der gesperrten Aktion als Antwort auf das Anzeigemittel veranlaßt haben, das meldet, daß ein Cursor (55) auf die gesperrte Aktion bewegt wurde.

11. System gemäß Anspruch 10, wobei jede in den Auswahlen enthaltene Auswahl ein Name einer Datendatei ist, wobei sich die Datendatei in dem Speicher (21) befindet.

12. System gemäß Anspruch 10, wobei sowohl gesperrte als auch ausführbare Aktionen in dem Menü angezeigt werden.

13. System gemäß Anspruch 10, wobei das Menü, das mindestens eine gesperrte Aktion enthält, ein Aktionsfenster von einer Aktionsleiste (57) ist, wobei das Aktionsfenster Unteraktionen einer Aktion in der Aktionsleiste (57) enthält und die gesperrte Aktion eine Unteraktion in dem Aktionsfenster ist.

14. System gemäß Anspruch 10, welches weiterhin ein Mittel zum Ändern einer Auswahl umfaßt, die das Sperren einer speziellen Aktion von einem ausgewählten zu einem nicht ausgewählten Status aus einer Teilauswahlliste (59) veranlaßt, die das Sperren der Aktion veranlaßt hat, wobei die gesperrte Aktion zu einer ausführbaren Aktion geändert wird.

## Revendications

1. Procédé dans un système de traitement de données comprenant un processeur (13), une mémoire (21), un moyen d'affichage (19) et un moyen d'entrée couplés ensemble au moyen d'un bus de système (23), comprenant les étapes consistant à :
établir une liste de sélections (59) contenant une pluralité de sélections dans la mémoire (21), qui ont été sélectionnées par un utilisateur,
mettre à jour la liste de sélections (59) en réponse à une sélection ou à une désélection par l'utilisateur,
déterminer si l'une quelconque des sélections contenues dans la liste de sélections (59) a désactivé une action quelconque dans une liste des actions contenant une pluralité d'actions,
afficher un menu (50) sur le moyen d'affichage (19), le menu contenant au moins une action désactivée, l'action désactivée étant affichée d'une manière qui indique que l'action désactivée est désactivée, et,
indiquer laquelle des sélections contenues dans la liste de sélections (59) a amené l'action désactivée à être désactivée en réponse au déplacement par l'utilisateur d'un curseur (55) vers l'action désactivée.

2. Procédé selon la revendication 1, dans lequel l'étape de détermination comprend l'étape consistant à comparer la liste des sélections (59) et la liste des actions vis à vis d'un fichier de données mémorisé dans la mémoire (21), qui indique lesquelles des actions contenues dans la liste d'actions sont désactivées par les sélections contenues dans la liste de sélections (59).

3. Procédé selon la revendication 1, dans lequel l'étape d'indication comprend en outre l'étape consistant à afficher une seconde liste de sélections contenant les sélections qui ont amené l'action désactivée à être désactivée.

4. Procédé selon la revendication 1, dans lequel chaque sélection contenue dans la liste de sélections (59) est un nom d'un fichier de données sous lequel réside le fichier de données dans la mémoire (21).

5. Procédé selon la revendication 1, dans lequel on affiche sur le menu à la fois des actions désactivées ou des actions exécutables (50).

6. Procédé selon la revendication 1, dans lequel le menu (50) contenant au moins une action désactivée est un menu déroulant à partir d'une barre d'actions (57), le menu déroulant contenant une action dans la barre d'actions, et l'action désactivée étant une sous-action de l'action dans la barre d'actions.

7. Procédé selon la revendication 3, qui comporte en outre l'étape consistant à faire passer une sélection qui amène l'action désactivée à être désactivée, d'un état sélectionné à un état désélectionné à partir de la seconde liste de sélections, en modifiant ainsi l'action désactivée en action exécutable.

8. Procédé selon la revendication 1, dans lequel l'étape d'indication est lancée par l'étape consistant à déplacer le curseur (55) vers l'action désactivée en manipulant un dispositif de pointage à souris (17).

9. Procédé selon la revendication 1, dans lequel l'étape d'indication est lancée par l'étape consistant à déplacer le curseur (55) vers l'action désactivée en manipulant un ensemble de touches de commande de curseur sur un clavier (15).

10. Système de traitement de données destiné à informer un utilisateur du système de ce qu'une pluralité de sélections faite par l'utilisateur du système a désactivé une action dans un menu présenté à l'utilisateur, comprenant :
une mémoire (21) destinée à mémoriser des modules de programme et des fichiers de données,
un processeur (13) couplé à la mémoire (21) au moyen d'un bus de système (23), le processeur (13) mettant en oeuvre le système de traitement de données conformément aux instructions dans les modules de programme mémorisés dans la mémoire (21),
un moyen destiné à établir une liste de sélections (59) dans la mémoire (21), la liste de sélections (59) contenant une pluralité de sélections qui ont été sélectionnées par l'utilisateur du système,
un moyen destiné à mettre à jour la liste des sélections (59) en réponse à une sélection ou à une désélection par l'utilisateur du système,
un moyen destiné à déterminer si l'une quelconque des sélections contenues dans la liste des sélections (59) a désactivé une action quelconque dans une liste d'actions contenant une pluralité d'actions,
un moyen d'affichage (19) destiné à afficher les informations à l'utilisateur du système, couplé au moyen de traitement et à la mémoire (21) au moyen d'un bus de système (23), le moyen d'affichage (19) affichant la liste d'actions dans un menu comprenant au moins une action désactivée affichée d'une manière qui indique son état désactivé,
un dispositif d'entrée destiné à demander au système de traitement de données les sélections qui amènent l'action désactivée à être désactivée, et,
un moyen destiné à indiquer laquelle des sélections a amené l'action désactivée à être désactivée, en réponse au moyen d'entrée signalant qu'un curseur (55) a été déplacé vers l'action désactivée.

11. Système selon la revendication 10, dans lequel chaque sélection contenue dans les sélections est un nom d'un fichier de données sous lequel réside le fichier de données dans la mémoire (21).

12. Système selon la revendication 10, dans lequel on affiche dans le menu à la fois des actions désactivées et des actions exécutables.

13. Système selon la revendication 10, dans lequel le menu contenant au moins une action désactivée est un menu déroulant à partir d'une barre d'actions (57), le menu déroulant contenant des sous-actions d'une action de la barre d'actions (57), et l'action désactivée étant une sous-action dans le menu déroulant.

14. Système selon la revendication 10, qui comprend en outre un moyen destiné à faire passer une sélection qui amène une action particulière à être désactivée d'un état sélectionné à un état désélectionné, à partir d'une seconde liste de sélections (59) qui a amené l'action à être désactivée, en modifiant ainsi l'action désactivée en une action exécutable.
